# FASCICULE DE BREVET EUROPEEN

(11) **EP 3 452 867 B1**
(45) Date de publication et mention de la délivrance du brevet: **01.04.2026**
(21) Numéro de dépôt: 17719294.5
(22) Date de dépôt: 28.04.2017
(51) Int. Cl.: G02B 27/01

(54) **DISPOSITIF DE PROJECTION D'IMAGES POUR AFFICHEUR TÊTE HAUTE AVEC VOLET DE PROTECTION ET AFFICHEUR TÊTE HAUTE ASSOCIÉS**
BILDPROJEKTIONSVORRICHTUNG FÜR HEAD-UP-ANZEIGE MIT ZUGEHÖRIGER SCHUTZBLENDE UND HEAD-UP-ANZEIGE
IMAGE PROJECTION DEVICE FOR HEAD-UP DISPLAY WITH ASSOCIATED PROTECTIVE SHUTTER AND HEAD-UP DISPLAY

(30) Priorité: 03.05.2016 FR 1654001
(43) Date de publication de la demande: 13.03.2019
(73) Titulaire: Valeo Comfort and Driving Assistance, 94000 Créteil (FR)
(72) Inventeur: DELPIERRE, Laurent, 94046 Créteil Cedex (FR); PIERRE, Lenaic, 94046 Créteil Cedex (FR); GRANDCLERC, François, 94046 Créteil Cedex (FR)
(74) Mandataire: Delplanque, Arnaud
(86) Numéro de dépôt international: PCT/EP2017/060219
(87) Numéro de publication internationale: WO 2017/191056

(56) Documents cités:
- WO-A1-2007/057608
- WO-A1-2012/007305
- US-A1- 2002 166 273
- US-A1- 2006 022 896

## Description

### DOMAINE TECHNIQUE AUQUEL SE RAPPORTE L'INVENTION

La présente invention concerne un dispositif de projection d'images et un afficheur tête haute comprenant un tel dispositif de projection d'images.

### ARRIERE-PLAN TECHNOLOGIQUE

Le principe des afficheurs tête haute pour véhicule est de projeter des images, notamment utiles à la conduite, directement dans le champ de vision d'un conducteur.

En général, les afficheurs tête haute comprennent une lame semi-transparente placée dans le champ de vision du conducteur, et un dispositif de projection d'images formé par une unité de génération d'images adaptée à générer des images, et par une unité de renvoi des images générées adaptée à renvoyer ces images vers cette lame semi-transparente.

On connaît par exemple un tel afficheur tête haute, dont la lame semi-transparente est le parebrise du véhicule, et dont le dispositif de projection d'images comprend un écran à cristaux liquides rétroéclairé par plusieurs sources lumineuses de type LED et un miroir réfléchissant.

L'écran et le miroir réfléchissant sont classiquement logés dans un conduit qui guide la lumière depuis l'écran jusqu'au miroir et du miroir vers une ouverture de sortie à travers laquelle la lumière sort du dispositif de projection en direction du parebrise.

Un inconvénient de cet agencement est lié au fait que cette ouverture de sortie reste ouverte même lorsque le dispositif de projection est inutilisé, de telle sorte que la poussière, le rayonnement ultra-violet ou infra-rouge de la lumière ambiante, des projections d'eau et/ou des objets étrangers tels que clefs, crayon, papier ou pièce de monnaie par exemple, peuvent pénétrer dans le conduit et endommager ou salir le miroir et/ou l'écran, ce qui diminue les performances du dispositif d'affichage.

US 2022166273 divulgue un dispositif de couverture d'afficheur tête haute. WO2012007305 divulgue un afficheur tête haute ajustable. WO2007057608 divulgue un dispositif d'affichage escamotable pour un véhicule automobile. US 2006022896 A1 divulgue un afficheur tête haute comprenant un élément de protection.

### OBJET DE L'INVENTION

Afin de remédier aux inconvénients précités de l'état de la technique, la présente invention propose un dispositif de projection comprenant un moyen d'obturation de ladite ouverture.

Plus particulièrement, on propose selon l'invention un dispositif de projection d'images pour afficheur tête haute comprenant une unité de génération d'images, une unité de renvoi des images générées et un conduit de protection les reliant, ledit conduit de protection débouchant sur une ouverture autorisant la projection, à l'extérieur du conduit de protection, de l'image générée par l'unité de génération et renvoyée par l'unité de renvoi, dans lequel ledit dispositif de projection comporte un volet de protection mobile en pivotement entre une position d'obturation dans laquelle il obture ladite ouverture et une position de libération dans laquelle il libère ladite ouverture de manière à permettre la projection des images.

Ainsi, grâce à l'invention, il est possible de fermer l'ouverture dudit conduit de manière simple, rapide et efficace de manière à protéger l'unité de génération d'images et l'unité de renvoi de la poussière, des projection d'eau et/ou du rayonnement ultra-violet ou infrarouge.

D'autres caractéristiques non limitatives et avantageuses du dispositif de projection selon l'invention conforme à l'invention sont les suivantes.

Selon une première caractéristique avantageuse, ledit volet est constitué d'un élément de paroi interne du conduit de protection. La fabrication du dispositif de projection est ainsi économique. L'encombrement lié au volet est réduit.

Selon une autre caractéristique avantageuse, ledit volet comprend un élément d'obturation distinct de la paroi interne du conduit de protection. Le conduit de protection peut alors former une enceinte fermée.

Selon une autre caractéristique avantageuse, ledit volet comprend une seule partie, mobile d'un seul bloc entre lesdites deux positions. La fabrication et la mise en œuvre du volet sont alors particulièrement simple.

Selon une autre caractéristique avantageuse, dans une autre variante, ledit volet comprend deux parties mobiles l'une par rapport à l'autre. Le volet présente alors une géométrie variable lui permettant d'être logé facilement dans le conduit de protection tout en fermant une ouverture de grandes dimensions.

Selon une autre caractéristique avantageuse, lesdites deux parties sont articulées entre elles. La fabrication et la mise en œuvre sont alors simples et rapides.

Selon une autre caractéristique avantageuse, lesdites deux parties sont repliées de manière à former un premier angle non nul strictement inférieur à 180° entre elles dans la position de libération et sont dépliées dans la position d'obturation de manière à former un deuxième angle supérieur audit premier angle.

Selon une autre caractéristique avantageuse, le mouvement de l'une des deux parties du volet entre la position d'obturation et la position de libération du volet entraîne le mouvement de l'autre partie. La mise en œuvre du volet est ainsi simple et rapide.

Selon une autre caractéristique avantageuse, ledit volet est monté mobile sur une partie du conduit de protection entourant ladite ouverture à une première extrémité de ce volet.

Selon une autre caractéristique avantageuse, il est prévu en outre dans le conduit de protection des moyens de guidage d'une deuxième extrémité de ce volet, opposée à la première, entre lesdites deux positions de ce volet. La mise en œuvre du volet est ainsi facilitée.

Selon une autre caractéristique avantageuse, ledit volet s'étend à partir de ladite ouverture, sur un côté du conduit de protection opposé à ladite unité de renvoi.

Selon une autre caractéristique avantageuse, ledit volet est adapté, dans sa position d'obturation, à protéger l'unité de renvoi et l'unité de génération d'image de la poussière et/ou de la lumière et/ou de projections d'eau ;

Selon une autre caractéristique avantageuse, les dimensions dudit volet sont telles que celui-ci est adapté à obturer complètement ladite ouverture dans la position d'obturation. La protection des éléments situés dans le conduit de protection est alors optimale.

Selon une autre caractéristique avantageuse, il est prévu un mécanisme d'obturation et de libération adapté à déplacer ledit volet de protection entre ses deux positions d'obturation et de libération.

L'invention propose également un afficheur tête haute comprenant un dispositif de projection d'images selon l'une des revendications précédentes, et une lame semi-transparente sur laquelle l'unité de renvoi d'images est adaptée à renvoyer les images générées par l'unité de génération d'images.

D'autres caractéristiques non limitatives et avantageuses de l'afficheur conforme à l'invention sont les suivantes :
- la lame semi-transparente est un combineur rétractable dans un logement de protection dudit dispositif de projection d'images ;
- il est prévu des moyens de déplacement du combineur adapté à déplacer le combineur entre une position déployée dans laquelle il fait saillie par rapport audit logement de protection du dispositif de projection d'images, et une position rétractée dans laquelle il est logé à l'intérieur dudit logement de protection du dispositif de projection d'images et dans lequel le dispositif de projection comprend un mécanisme d'obturation et de libération adapté à déplacer ledit volet entre ses deux positions d'obturation et de libération, qui est couplé auxdits moyens de déplacement du combineur de telle sorte que le déplacement du combineur vers sa position déployée soit couplé au déplacement du volet vers sa position de libération, et que le déplacement du combineur vers sa position rétractée soit couplé au déplacement du volet vers sa position d'obturation ;
- lesdits moyens de déplacement du combineur sont adaptés à déplacer le combineur autour de sa position déployée sans déplacer ledit volet ;
- la lame semi-transparente comprend une partie du parebrise d'un véhicule dans lequel le dispositif de projection est installé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'un afficheur tête haute selon l'invention ;
- la figure 2 est une représentation schématique d'un premier mode de réalisation du dispositif de projection selon l'invention, avec le volet de protection en position de libération de l'ouverture de sortie de la lumière ;
- la figure 3 est une représentation schématique du dispositif de projection de la figure 2, dans lequel le volet de protection est en position d'obturation de l'ouverture ;
- la figure 4 est une représentation schématique d'un deuxième mode de réalisation du dispositif de projection selon l'invention, dans lequel le volet de protection est en position de libération de l'ouverture ; et,
- la figure 5 est une représentation schématique du dispositif de projection de la figure 4, dans lequel le volet de protection est en position d'obturation de l'ouverture,
- la figure 6 est une représentation schématique du volet de protection du dispositif de projection de la figure 4 dans ses deux positions (en pointillé en position d'obturation et en trait plein en position de libération).

Dans la suite de la description, les termes « inférieur » et « supérieur » seront utilisés pour désigner les éléments en position dans le véhicule automobile, par rapport à la direction verticale dudit véhicule automobile. La partie inférieure d'un élément désignera la partie de cet élément qui est située du côté du plancher du véhicule et la partie supérieure désignera la partie de cet élément qui est située du côté du toit.

Les éléments similaires ou correspondants des différents modes de réalisation décrits seront référencés par les mêmes signes et ne seront pas décrits en détails à chaque fois.

En pratique, ici, les deux modes de réalisation des dispositifs de projection décrits ne diffèrent que par la forme du volet de protection, comme cela sera expliqué ultérieurement.

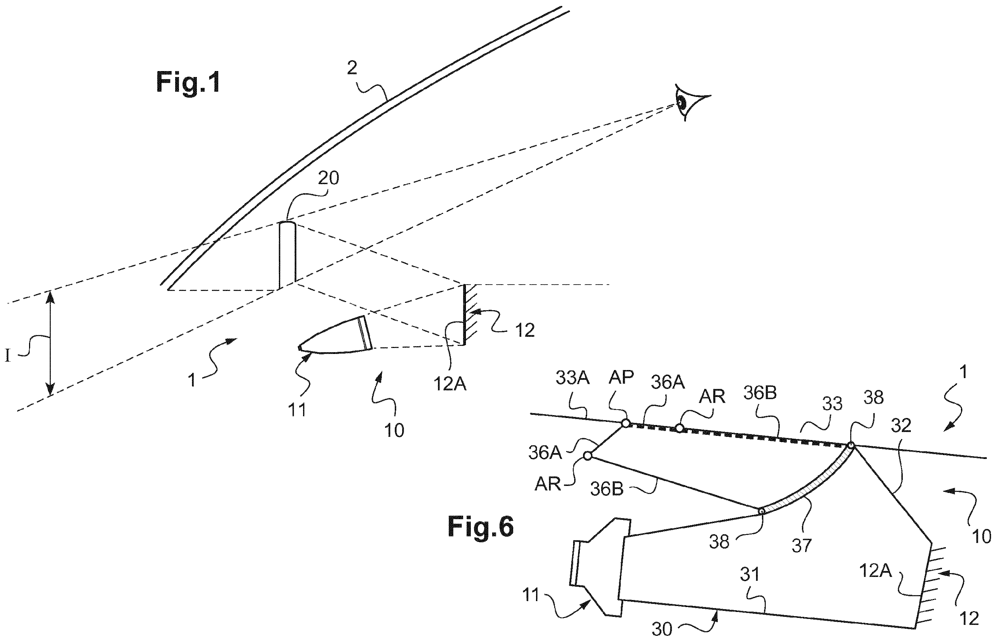

Sur la figure 1, on a représenté les éléments principaux d'un afficheur 1 tête haute destiné à équiper un véhicule, par exemple un véhicule automobile.

Un tel afficheur 1 est adapté à créer une image virtuelle l dans le champ de vision d'un conducteur du véhicule, de sorte que le conducteur puisse voir cette image virtuelle l et les informations éventuelles qu'elle contient sans avoir à détourner le regard de la route.

A cet effet, l'afficheur 1 comprend une lame semi-transparente 20, placée dans le champ de vision du conducteur (voir figure 1), et un dispositif de projection 10 d'images adapté à générer une image et à l'envoyer en direction de la lame semi-transparente 20.

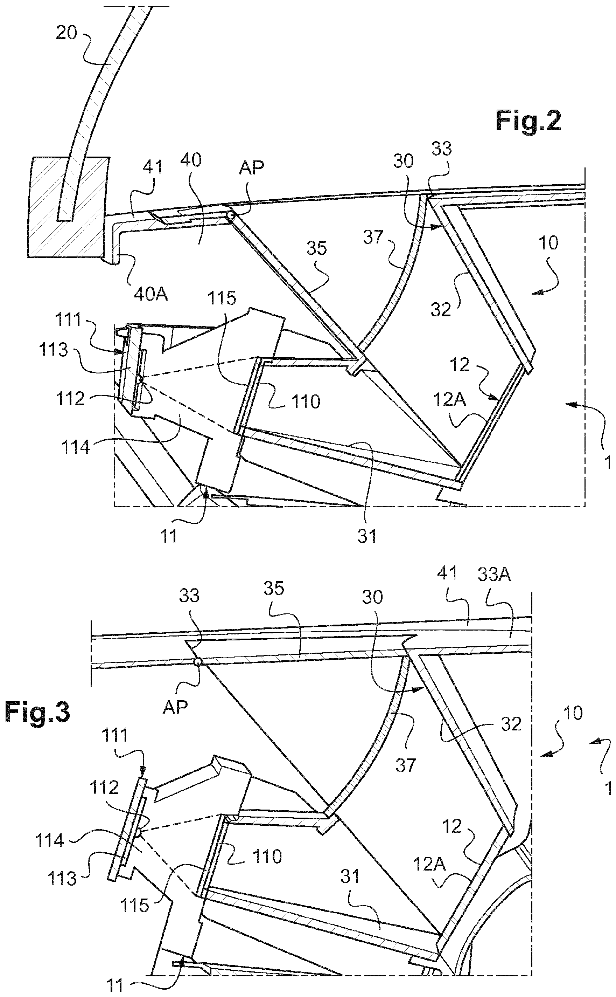

Plus précisément, comme représenté sur les figures 2 à 6, le dispositif de projection 10 d'images comprend une unité de génération 11 d'images adaptée à générer des images et une unité de renvoi 12 des images adaptée à recevoir les images de l'unité de génération et à les renvoyer en direction de la lame semi-transparente 20.

L'unité de génération 11 est reliée à l'unité de renvoi 12 par un conduit de protection 30.

Ce conduit de protection est délimité par une paroi interne. La section de ce conduit est ici trapezoïdale.

De préférence, le conduit de protection 30 est réalisé en une matière opaque, ce qui permet d'isoler les unités de génération et de renvoi d'images des sources de lumière extérieure auxdites unités. Ainsi, les images envoyées vers le combineur présentent une luminosité plus intense et leur netteté est améliorée.

Ce conduit de protection 30 présente une forme coudée.

L'unité de génération d'images 11 est disposée à une première extrémité du conduit de protection 30.

Une première partie 31 de ce conduit de protection est adaptée à acheminer la lumière émise par l'unité de génération 11 jusqu'à l'unité de renvoi 12, située au coude du conduit.

Une deuxième partie 32 du conduit de protection 30 est adaptée à acheminer la lumière renvoyée par l'unité de renvoi 12 vers une ouverture de sortie 33 du conduit de protection 30 située à sa deuxième extrémité.

La lumière qui traverse cette ouverture de sortie se propage jusqu'à la lame semi-transparente 20 et l'image générée par l'unité de génération 11 et renvoyée par l'unité de renvoi 12 est ainsi projetée sur cette lame semi-transparente 20.

Les figures 2 à 6 montrent le dispositif de projection 10 d'images de l'afficheur tête haute 1 en coupe et en détails.

L'unité de renvoi 12 du dispositif de projection 10 comprend ici un miroir 12A de repliement. Ici, le miroir 12A est un miroir plan.

L'unité de renvoi 12 comprend également un support de fixation dudit miroir 12A, sur lequel ledit miroir est fixé, et qui comprend par ailleurs des moyens autorisant sa fixation sur le conduit 30 (figures 2, 3, 4 et 6).

Ici, le miroir 12A est fixé dans une fenêtre ménagée dans le conduit de protection 30, au niveau du coude de celui-ci.

En variante, l'unité de renvoi des images générées pourrait comprendre une pluralité de miroirs et/ou d'autres éléments optiques.

L'unité de génération 11 d'images du dispositif de projection 10 comprend par exemple un écran 110 rétroéclairé par un module de rétroéclairage 111.

L'écran 110 est un écran à cristaux liquides (ou LCD pour *"Liquid Crystal Display*"), par exemple à transistors en couche mince (ou TFT pour *"Thin-Film Transistor").*

Le module de rétroéclairage 111 est représenté plus en détails sur la figure 2. Il comprend par exemple un ensemble de sources de lumière 112 disposées sur un support 113, et un réflecteur 114 associé à un diffuseur 115. Le support 113 des sources de lumière 112 est disposé au fond du réflecteur 114. Le diffuseur 115 est placé sur une extrémité du réflecteur 114 opposée aux sources de lumière 112, de manière à ce que l'ensemble composé du support 113, du réflecteur 114, et du diffuseur 115 forme une enceinte fermée.

Les sources de lumière 112 sont ici des diodes électroluminescentes (ou LED pour « Light Emitting Diode ») montées sur un circuit imprimé jouant le rôle de support 113.

Le réflecteur 114 peut être vu comme une boîte optique dont les parois sont illuminées sur leur face interne par l'ensemble des sources de lumière 112. Le réflecteur 114 est adapté à réfléchir la lumière de façon optimale pour que la luminosité soit homogène au niveau du diffuseur 115.

Le diffuseur 115 peut être réalisé au moyen d'un film ayant une face lisse tournée vers les sources de lumière 112 et une face grainée opposée, tournée vers l'écran 110, qui produit la diffusion de la lumière.

L'écran 110 est placé au contact du diffuseur 115, devant celui-ci, avec son plan d'extension parallèle à celui dudit diffuseur 115.

En variante, l'unité de de génération d'images pourrait comprendre un diffuseur et une unité de balayage qui génèrerait un faisceau lumineux de direction variable pour balayer une des faces dudit diffuseur.

L'unité de balayage comprendrait alors un module de formation d'un faisceau lumineux, par exemple formé de trois sources lumineuses monochromatiques, et un miroir mobile par exemple réalisé sous la forme d'un microsystème électromécanique (ou MEMS pour "*MicroElectroMechanical System*")*.*

Le réflecteur 114 comprend de plus des moyens de montage sur ladite première extrémité du conduit de protection 30.

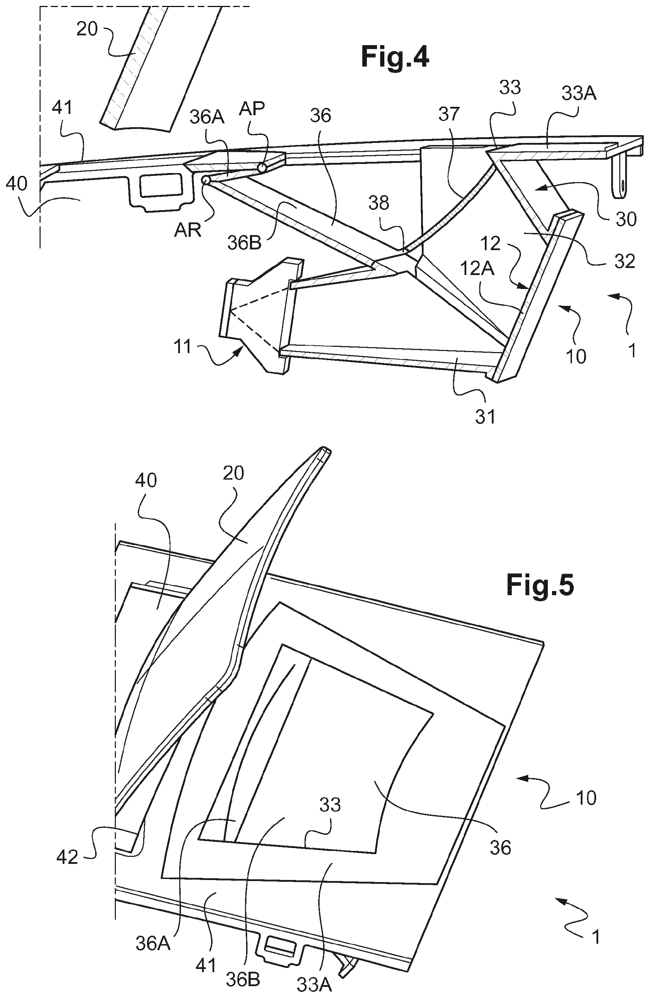

Le dispositif de projection 10 est ici logé dans un logement de protection 40 comprenant un caisson 40A (figures 2 et 4).

Le logement de protection 40 est de préférence réalisé en une matière plastique rigide et opaque.

Ainsi, avantageusement, le logement de protection 40 permet de protéger et de cacher les éléments optiques du dispositif de projection d'images. Il permet également de confiner le dispositif de projection d'images pour l'isoler de toute source de lumière parasite qui pourrait nuire à son bon fonctionnement.

Le conduit de protection 30 débouche au niveau de son ouverture de sortie 33 sur une paroi supérieure 41 de ce logement de protection 40 (voir notamment la figure 5).

Ici, le conduit de protection 30 comporte une paroi d'extrémité 33A qui encadre l'ouverture de sortie 33 et vient se placer dans le prolongement de la paroi supérieure 41 du logement de protection 40.

Dans l'exemple de réalisation de l'afficheur tête haute 1 décrit et représenté ici, la lame semi-transparente 20 est un combineur.

Il est ici placé entre le parebrise 2 du véhicule et les yeux du conducteur (figure 1).

En outre, de façon avantageuse, la lame semi-transparente 20 est ici rétractable dans le logement de protection 40 dudit dispositif de projection 10 d'images (voir figure 4 et 5).

Plus précisément, la lame semi-transparente 20 peut adopter deux positions distinctes : une position déployée dans laquelle elle fait saillie au dessus de la paroi supérieure 41 dudit logement de protection 40, et une position rétractée dans laquelle elle est logée à l'intérieur du logement de protection 40.

La lame semi-transparente 20 se déplace à cet effet à travers une fenêtre 42 ménagée dans ladite paroi supérieure 41 du logement de protection 40 (figure 5).

Ainsi, en position rétractée, la lame semi-transparente 20 est intégralement logée dans le logement de protection 30, à l'avant du dispositif de projection.

De manière à pouvoir passer facilement de la position rétractée à la position déployée, la lame semi-transparente 10 est montée sur des moyens de déplacement 11.

Ces moyens de déplacement sont adaptés à déplacer le combineur entre la position déployée et la position rétractée.

Ces moyens de déplacement 11 comprennent par exemple un ensemble d'engrenage et/ou de pignons et/ou de cames.

Ils sont motorisés par un moteur de type DC ou AC ou un moteur de type stepper.

De préférence, ces moyens de déplacement 11 assurent également le déplacement d'un couvercle venant protéger le combineur dans sa position rétractée.

En variante, on pourrait prévoir que la lame semi-transparente comprend une partie du parebrise du véhicule dans lequel le dispositif de projection est installé. Le combineur pourrait alors être omis (ainsi que les moyens de déplacement de celui-ci).

Le logement de protection 30 est ici intégré au tableau de bord du véhicule.

De manière remarquable, ledit dispositif de projection 10 comporte un volet 35 ; 36 de protection mobile en pivotement autour d'un axe de pivotement AP entre une position d'obturation dans laquelle il obture ladite ouverture de sortie 33 (figures 2 et 4) et une position de libération dans laquelle il libère ladite ouverture de sortie 33 (figures 3 et 5) de manière à permettre la projection des images.

Dans sa position de libération, le volet 35 ; 36 est logé à l'intérieur du conduit de protection 30.

Avantageusement, dans les modes de réalisation représentés sur les figures annexées, ledit volet 35 ; 36 est constitué d'un élément de paroi interne du conduit de protection 30. En d'autres termes, ledit volet de protection forme une partie de la paroi interne du conduit de protection.

Ainsi, la réalisation de ce volet ne nécessite pas d'ajout de matière dans le conduite de protection. Le dispositif de projection correspondant est particulièrement économique.

De préférence, le volet 35 ; 36 est réalisé en une matière résistante, étanche et opaque, de manière à protéger les unités de génération d'images et de renvoi de la poussière, des projections d'eau et du rayonnement ultra-violet ou infra-rouge qui pourrait les endommager ou limiter leurs performances.

De préférence, les dimensions dudit volet 35 ; 36 sont telles que celui-ci est adapté à obturer complètement ladite ouverture dans la position d'obturation.

En d'autres termes, la forme et les dimensions du volet sont complémentaires, à un jeu près, à celles de l'ouverture de sortie.

On peut également envisager l'ajout d'un joint d'étanchéité périphérique le long du contour du volet afin de rendre l'obturation du conduit de protection par le volet étanche à l'eau. Dans un premier mode de réalisation représenté sur les figures 2 et 3, ledit volet 35 comprend une seule partie, mobile d'un seul bloc entre lesdites deux positions.

Selon un deuxième mode de réalisation représenté sur les figures 4 à 6, ledit volet 36 comprend deux parties distinctes 36A, 36B mobiles l'une par rapport à l'autre.

Ce mode de réalisation présente l'avantage de conférer une géométrie variable audit volet. Ainsi, le volet peut notamment présenter une configuration de longueur réduite et une configuration de longueur plus étendue.

Il peut notamment se déployer entre les positions de libération et d'obturation de manière à ce que ce volet soit logé, dans la position de libération, dans un espace réduit et s'étende néanmoins, dans sa position d'obturation, sur l'ensemble de l'ouverture de sortie 33.

Ces deux parties 36A, 36B sont ici articulées entre elles.

Elles sont plus précisément articulées par une charnière. Les deux parties 36A, 36B pivotent l'une par rapport à l'autre autour d'un axe de repliement AR (figures 4 et 6).

Plus précisément, lesdites deux parties 36A, 36B du volet 36 sont ici repliées de manière à former un premier angle non nul strictement inférieur à 180° entre elles dans la position de libération et sont dépliées dans la position d'obturation de manière à former un deuxième angle supérieur audit premier angle (figures 4 et 5).

Les deux parties 36A, 36B du volet 36 sont de préférence repliées dans la position de libération de manière à faire saillie vers l'extérieur du conduit de protection, de manière à libérer la section interne du conduit au maximum (figure 6).

En variante, on peut envisager que les deux parties coulissent l'une par rapport à l'autre.

De préférence, les deux parties 36A, 36B du volet 36 s'étendent dans le prolongement l'une de l'autre dans la position d'obturation du volet (voir figure 6).

Le volet 36 est ainsi plat et s'étend de préférence dans la continuité de la paroi d'extrémité 33A du conduit de protection 30.

Quel que soit le mode de réalisation, le volet 35 ; 36 s'étend de préférence dans le plan de la paroi d'extrémité 33A du conduit de protection 30, qui se trouve dans le prolongement de la paroi supérieure 41 du logement de protection 40 dans sa position de libération. Il s'étend à l'intérieur du conduit de manière à former une partie de la paroi interne de ce conduit dans sa position de libération.

Le volet 35 ; 36 présente ici un contour de forme globalement rectangulaire ou trapézoïdale complémentaire de la forme de l'ouverture de sortie 33 du conduit de protection 30. L'un des côtés de ce rectangle ou de ce trapèze est ici légèrement incurvé vers l'intérieur, comme cela est visible sur les figures 3 et 5.

En variante, le volet peut présenter toute autre forme adaptée.

Une première extrémité du volet 35 ; 36, c'est-à-dire ici un premier bord de ce volet 35 ; 36 est monté mobile sur une partie du conduit de protection entourant ladite ouverture de sortie 33, ici sur la paroi d'extrémité 33A de ce conduit. Plus précisément, le volet 35 ; 36 est articulé par une charnière disposée le long dudit premier bord de ce volet 35 ; 36, à proximité de ladite ouverture de sortie 33. L'axe de pivotement AP du volet s'étend le long de ce premier bord du volet 35, 36.

Le volet 35 ; 36 s'étend ici à partir de ladite ouverture de sortie 33, sur un côté du conduit de protection 30 opposé à ladite unité de renvoi 12 (figures 2 et 4).

Dans le cas du deuxième mode de réalisation, la charnière reliant le volet 36 à la paroi d'extrémité 33A du conduit de protection 30 et la charnière reliant les deux parties du volet s'étendent parallèlement. En d'autres termes, l'axe de pivotement AP du volet 36 s'étend parallèlement à l'axe de repliement AR de ce volet.

Le dispositif de projection 10 comporte en outre des moyens de guidage d'une deuxième extrémité de ce volet, opposée à la première, entre lesdites deux positions de ce volet.

Il s'agit ici de moyens de glissières, comprenant d'une part deux rainures 37 ménagées dans les parois latérales du conduit de protection et deux pions 38 disposés à proximité de la deuxième extrémité du volet, en saillie par rapport aux bords latéraux du volet adjacents audit premier bord (figure 4).

Les moyens de guidage peuvent également comprendre des rails.

Dans le cas du deuxième mode de réalisation, le dispositif de projection 10 peut également comprendre des moyens de guidage de la jonction entre lesdites deux parties 36A, 36B du volet. Il peut s'agir de manière similaire de moyens de glissières comprenant deux rainures ménagées dans les parois latérales du conduit de protection et deux pions disposés selon l'axe de repliement du volet 36, en saillie de ce volet (non représentés ici).

Le dispositif de projection comporte en outre de préférence un mécanisme d'obturation et de libération adapté à déplacer ledit volet entre ses deux positions d'obturation et de libération.

Ce mécanisme d'obturation et de libération est par exemple commandé par une unité de commande électronique de manière à ce que le volet se place automatiquement en position d'obturation lorsque le véhicule est à l'arrêt, ou plus généralement, lorsque le dispositif de projection est inutilisé.

Il peut s'agir d'un mécanisme commandé mécaniquement ou électroniquement.

De préférence, le mécanisme d'obturation et de libération adapté à déplacer ledit volet entre ses deux positions d'obturation et de libération est couplé auxdits moyens de déplacement du combineur de telle sorte que le déplacement du combineur vers sa position déployée entraîne le déplacement du volet vers sa position de libération, et le déplacement du combineur vers sa position rétractée entraîne le déplacement du volet vers sa position d'obturation.

Inversement, on peut envisager que le mécanisme d'obturation et de libération adapté à déplacer ledit volet entre ses deux positions d'obturation et de libération est couplé auxdits moyens de déplacement du combineur de telle sorte que le déplacement du volet vers sa position de libération entraîne le déplacement du combineur vers sa position déployée, et le déplacement du volet vers sa position d'obturation entraîne le déplacement du combineur vers sa position rétractée.

Ce couplage peut être mécanique ou électronique. Dans ce dernier cas, l'unité de commande électronique commande le mouvement du volet et le déplacement du combineur. On envisage ici plus précisément un couplage mécanique par l'intermédiaire des engrenages desdits moyens de déplacement 11 du combineur.

Le volet 35 ou l'une des parties 36A, 36B du volet 36 est par exemple reliée à l'un de ces engrenages. Cette liaison implique par exemple un ou plusieurs systèmes de découplage, de cames et de tiges.

Les engrenages et/ou pignons desdits moyens de déplacement 11 présentent des sillons gravés dans les roues dentées qui permettent de diriger vers différentes positions et à différentes vitesses les différents éléments : combineur, couvercle du combineur et volet.

Le combineur et le volet peuvent alors être actionnés à l'aide d'un unique moteur.

De préférence encore, dans le deuxième mode de réalisation du dispositif de projection, le mouvement de l'une des deux parties 36A, 36B du volet 36 entre les positions d'obturation et de libération entraîne le mouvement de l'autre partie de ce volet.

Ici, on envisage par exemple que la partie 36B du volet 36 située à l'extrémité libre de celui-ci est par exemple reliée à l'un de ces engrenages.

Les pions disposés aux extrémités de la charnière s'étendant le long de l'axe de repliement AR coopèrent avec les rainures complémentaires. Le mouvement de la partie 36B du volet 36 située à l'extrémité libre de celui-ci entraîne alors le mouvement de l'autre partie 36A du volet 36.

En variante, on envisage que ce soit la partie 36A du volet 36, montée sur la paroi d'extrémité 3 du conduit de protection, qui est actionnée par un dispositif motorisé : celui-ci entraîne un mouvement de rotation de cette partie 36A autour de l'axe de la charnière reliant la partie 36A du volet à la paroi d'extrémité 33A du conduit de protection. Le bord de cette partie 36A opposée à cette charnière, qui est relié à l'autre partie 36B du volet, décrit une trajectoire circulaire (figure 6).

Ce faisant, la partie 36A du volet actionnée par le dispositif motorisé entraîne l'autre partie 36B du volet en mouvement : les pions disposés à la deuxième extrémité du volet glissent dans les rainures 37. Le dispositif motorisé peut avantageusement entraîner également simultanément le mouvement de déplacement du combineur.

En variante, on peut envisager que le volet soit muni par exemple d'une poignée et que son actionnement soit réalisé manuellement.

Cet actionnement manuel peut également entraîner le déplacement du combineur par un dispositif mécanique d'entraînement.

Inversement, on peut envisager que l'actionnement manuel ou motorisé du combineur entraîne le passage du volet de l'une à l'autre de ses deux positions.

Par ailleurs, lesdits moyens de déplacement 11 du combineur 20 sont adaptés à déplacer le combineur autour de sa position déployée sans déplacer ledit volet 35 ; 36.

On prévoit en effet de préférence des moyens de réglage fins de la position du combineur 20 dans sa position déployée dont la mise en œuvre est découplée du mécanisme d'obturation et de libération du volet 35 ; 36. Cela est réalisé par exemple grâce à des jeux de cames disposés à l'intérieur de la roue dentée de l'engrenage des moyens de déplacements du combineur. Lors de ce réglage fin de position, aucun mouvement du volet n'est entraîné par le déplacement du combineur.

On a décrit ici deux modes de réalisation dans lesquels le volet est formé par une paroi du conduit de protection du dispositif de projection.

En variante, on peut envisager que le volet comprend un élément d'obturation distinct de la paroi interne du conduit de protection. Il s'agit alors d'une plaque monté mobile en pivotement de manière tout à fait similaire au montage du volet décrit précédemment. Dans la position de libération, le volet s'étend alors contre la paroi interne du conduit de protection au lieu de former une partie de cette paroi interne.

Cet agencement présente l'avantage de permettre une fermeture complète du conduit de protection lorsque le volet est dans sa position d'obturation. La protection des unités de génération d'images et de renvoi est alors encore améliorée.

En variante, on peut envisager que les deux parties du volet soit mobile en coulissement l'une par rapport à l'autre.

En variante encore, on peut envisager que le volet comporte une pluralité de parties dont au moins deux sont mobiles l'une par rapport à l'autre.

## Revendications

1. Dispositif de projection (10) d'images pour afficheur tête haute (1) logé dans un logement de protection (40) comprenant un caisson (40A), ledit dispositif de projection (10) comprenant une unité de génération (11) d'images, une unité de renvoi (12) des images générées**,** ledit dispositif de projection étant **caractérisé par** un conduit de protection (30) reliant l'unité de génération (11) d'images et l'unité de renvoi (12), ledit conduit de protection (30) étant délimité par une paroi interne, ledit conduit de protection (30) débouchant sur une ouverture (33) située sur une paroi supérieure (41) de ce logement de protection (40) autorisant la projection, à l'extérieur du conduit de protection (30), de l'image générée par l'unité de génération (11) et renvoyée par l'unité de renvoi (12), dans lequel ledit dispositif de projection (10) comporte un volet (35 ; 36) mobile en pivotement entre une position d'obturation dans laquelle il obture ladite ouverture (33) et une position de libération dans laquelle il libère ladite ouverture (33) de manière à permettre la projection des images et en ce que, le volet (35;36) s'étend à l'intérieur du conduit de protection **(30)** de manière à former une partie de la paroi interne de ce conduit dans sa position de libération.

2. Dispositif de projection (10) selon la revendication 1, dans lequel ledit volet (35) comprend une seule partie, mobile d'un seul bloc entre lesdites deux positions.

3. Dispositif de projection (10) selon l'une des revendications 1 **et** 2 , dans lequel ledit volet (36) comprend deux parties (36A, 36B) mobiles l'une par rapport à l'autre.

4. Dispositif de projection (10) selon la revendication 3, dans lequel lesdites deux parties (36A, 36B) du volet (36) sont articulées entre elles.

5. Dispositif de projection (10) selon l'une des revendications 3 et 4, dans lequel lesdites deux parties (36A, 36B) sont repliées de manière à former un premier angle non nul strictement inférieur à 180° entre elles dans la position de libération et sont dépliées dans la position d'obturation de manière à former un deuxième angle supérieur audit premier angle.

6. Dispositif de projection (10) selon l'une des revendications 3 à 5, dans lequel le mouvement de l'une des deux parties (36A, 36B) du volet (36) entre la position d'obturation et la position de libération entraîne le mouvement de l'autre partie (36A, 36B) du volet.

7. Dispositif de projection (10) selon l'une des revendications 1 à 6, dans lequel ledit volet (35 ; 36) est monté mobile sur une partie du conduit de protection (30) entourant ladite ouverture (33), à une première extrémité de ce volet (35 ; 36).

8. Dispositif de projection (10) selon l'une des revendications 1 à 7, dans lequel il est prévu en outre des moyens de guidage (37, 38) d'une deuxième extrémité de ce volet (35 ; 36), opposée à la première, entre lesdites deux positions de ce volet (35 ; 36).

9. Dispositif de projection (10) selon l'une des revendications 1 à 8, dans lequel ledit volet (35 ; 36) s'étend à partir de ladite ouverture (33), sur un côté du conduit de protection (30) opposé à ladite unité de renvoi (12).

10. Afficheur tête haute (1) comprenant un dispositif de projection (10) d'images selon l'une des revendications précédentes, et une lame semi-transparente (20) sur laquelle l'unité de renvoi (12) d'images est adaptée à renvoyer les images générées par l'unité de génération (11) d'images.

11. Afficheur tête haute (1) selon la revendication 10, dans lequel la lame semi-transparente (20) est un combineur rétractable dans un logement de protection (40) dudit dispositif de projection (10) d'images.

12. Afficheur tête haute (1) selon la revendication 11, dans lequel il est prévu des moyens de déplacement du combineur adaptés à déplacer le combineur entre une position déployée dans laquelle il fait saillie par rapport par rapport audit logement de protection (40) du dispositif de projection (10) d'images, et une position rétractée dans laquelle il est logé à l'intérieur dudit logement de protection (40) du dispositif de projection (10) d'images et dans lequel le dispositif de projection comprend un mécanisme d'obturation et de libération adapté à déplacer ledit volet de protection entre ses deux positions d'obturation et de libération, qui est couplé auxdits moyens de déplacement du combineur de telle sorte que le déplacement du combineur vers sa position déployée soit couplé au déplacement du volet (35 ; 36) vers sa position de libération, et que le déplacement du combineur vers sa position rétractée soit couplé au déplacement du volet (35 ; 36) vers sa position d'obturation.

13. Afficheur tête haute (1) selon la revendication 11, dans lequel lesdits moyens de déplacement (11) du combineur (20) sont adaptés à déplacer le combineur (20) autour de sa position déployée sans déplacer ledit volet (36).

14. Afficheur tête haute selon la revendication 11, dans lequel la lame semi-transparente comprend une partie du parebrise d'un véhicule dans lequel le dispositif de projection est installé.

## Patentansprüche

1. Projektionsvorrichtung (10) von Bildern für ein Head-up-Display (1), die in einem Schutzgehäuse (40) untergebracht ist, das einen Kasten (40A) umfasst, wobei die Projektionsvorrichtung (10) eine Bildgenerierungseinheit (11), eine Umlenkeinheit (12) der generierten Bilder umfasst, wobei die Projektionsvorrichtung **gekennzeichnet ist durch** einen Schutzkanal (30), der die Bildgenerierungseinheit (11) und die Umlenkeinheit (12) verbindet, wobei der Schutzkanal (30) durch eine innere Wand begrenzt ist, wobei der Schutzkanal (30) in eine Öffnung (33) mündet, die sich an einer oberen Wand (41) dieses Schutzgehäuses (40) befindet und die Projektion des von der Generierungseinheit (11) erzeugten und von der Umlenkeinheit (12) umgelenkten Bildes nach außerhalb des Schutzkanals (30) ermöglicht, wobei die Projektionsvorrichtung (10) eine schwenkbar bewegliche Klappe (35; 36) aufweist, die zwischen einer Verschlussposition, in der sie die Öffnung (33) verschließt, und einer Freigabeposition, in der sie die Öffnung (33) freigibt, um die Projektion der Bilder zu ermöglichen, beweglich ist, und dadurch, dass sich die Klappe (35; 36) im Inneren des Schutzkanals (30) erstreckt, um in ihrer Freigabeposition einen Teil der Innenwand dieses Kanals zu bilden.

2. Projektionsvorrichtung (10) nach Anspruch 1, wobei die Klappe (35) einen einzigen Teil umfasst, der als Ganzes zwischen den beiden Positionen beweglich ist.

3. Projektionsvorrichtung (10) nach einem der Ansprüche 1 und 2, wobei die Klappe (36) zwei Teile (36A, 36B) umfasst, die relativ zueinander beweglich sind.

4. Projektionsvorrichtung (10) nach Anspruch 3, wobei die beiden Teile (36A, 36B) der Klappe (36) miteinander gelenkig verbunden sind.

5. Projektionsvorrichtung (10) nach einem der Ansprüche 3 und 4, wobei die beiden Teile (36A, 36B) so gefaltet sind, dass sie in der Freigabeposition einen ersten, von Null verschiedenen Winkel, der streng kleiner als 180° ist, zwischen sich bilden und in der Verschlussposition so entfaltet sind, dass sie einen zweiten Winkel bilden, der größer als der erste Winkel ist.

6. Projektionsvorrichtung (10) nach einem der Ansprüche 3 bis 5, wobei die Bewegung eines der beiden Teile (36A, 36B) der Klappe (36) zwischen der Verschlussposition und der Freigabeposition die Bewegung des anderen Teils (36A, 36B) der Klappe bewirkt.

7. Projektionsvorrichtung (10) nach einem der Ansprüche 1 bis 6, wobei die Klappe (35; 36) an einem ersten Ende dieser Klappe (35; 36) beweglich an einem Teil des Schutzkanals (30) montiert ist, der die Öffnung (33) umgibt.

8. Projektionsvorrichtung (10) nach einem der Ansprüche 1 bis 7, wobei ferner Führungsmittel (37, 38) für ein zweites Ende dieser Klappe (35; 36), das dem ersten gegenüberliegt, zwischen den beiden Positionen dieser Klappe (35; 36) vorgesehen sind.

9. Projektionsvorrichtung (10) nach einem der Ansprüche 1 bis 8, wobei sich die Klappe (35; 36) von der Öffnung (33) aus auf einer Seite des Schutzkanals (30) erstreckt, die der Umlenkeinheit (12) gegenüberliegt.

10. Head-up-Display (1), umfassend eine Bildprojektionsvorrichtung (10) nach einem der vorhergehenden Ansprüche und eine halbtransparente Scheibe (20), auf die die Bildumlenkeinheit (12) die von der Bildgenerierungseinheit (11) erzeugten Bilder umzulenken geeignet ist.

11. Head-up-Display (1) nach Anspruch 10, wobei die halbtransparente Scheibe (20) ein Combiner ist, der in ein Schutzgehäuse (40) der Bildprojektionsvorrichtung (10) einziehbar ist.

12. Head-up-Display (1) nach Anspruch 11, wobei Mittel zur Bewegung des Combiners vorgesehen sind, die geeignet sind, den Combiner zwischen einer ausgefahrenen Position, in der er in Bezug auf das Schutzgehäuse (40) der Bildprojektionsvorrichtung (10) hervorsteht, und einer eingezogenen Position, in der er innerhalb des Schutzgehäuses (40) der Bildprojektionsvorrichtung (10) untergebracht ist, zu bewegen, und wobei die Projektionsvorrichtung einen Verschluss- und Freigabemechanismus umfasst, der geeignet ist, die Schutzklappe zwischen ihren beiden Verschluss- und Freigabepositionen zu bewegen, der mit den Mitteln zur Bewegung des Combiners so gekoppelt ist, dass die Bewegung des Combiners in seine ausgefahrene Position mit der Bewegung der Klappe (35; 36) in ihre Freigabeposition gekoppelt ist, und dass die Bewegung des Combiners in seine eingezogene Position mit der Bewegung der Klappe (35; 36) in ihre Verschlussposition gekoppelt ist.

13. Head-up-Display (1) nach Anspruch 11, wobei die Bewegungsmittel (11) des Combiners (20) geeignet sind, den Combiner (20) um seine ausgefahrene Position zu bewegen, ohne die Klappe (36) zu bewegen.

14. Head-up-Display nach Anspruch 11, wobei die halbtransparente Scheibe einen Teil der Windschutzscheibe eines Fahrzeugs umfasst, in dem die Projektionsvorrichtung installiert ist.

## Claims

1. Image projection device (10) for head-up display (1) housed in a protective housing (40) comprising a casing (40A), said projection device (10) comprising an image generation unit (11), a reflection unit (12) for the generated images, said projection device being **characterized by** a protective conduit (30) connecting the image generation unit (11) and the reflection unit (12), said protective conduit (30) being delimited by an internal wall, said protective conduit (30) opening onto an opening (33) located on an upper wall (41) of this protective housing (40) allowing the projection, outside the protective conduit (30), of the image generated by the generation unit (11) and reflected by the reflection unit (12), wherein said projection device (10) includes a flap (35; 36) pivotally movable between a blocking position in which it blocks said opening (33) and a release position in which it frees said opening (33) so as to allow the projection of images and in that the flap (35;36) extends inside the protective conduit (30) so as to form part of the internal wall of this conduit in its release position.

2. Projection device (10) according to claim 1, wherein said flap (35) comprises a single part, movable as a single block between said two positions.

3. Projection device (10) according to one of claims 1 and 2, wherein said flap (36) comprises two parts (36A, 36B) movable relative to each other.

4. Projection device (10) according to claim 3, wherein said two parts (36A, 36B) of the flap (36) are articulated to each other.

5. Projection device (10) according to one of claims 3 and 4, wherein said two parts (36A, 36B) are folded so as to form a first non-zero angle strictly less than 180° between them in the release position and are unfolded in the blocking position so as to form a second angle greater than said first angle.

6. Projection device (10) according to one of claims 3 to 5, wherein the movement of one of the two parts (36A, 36B) of the flap (36) between the blocking position and the release position causes the movement of the other part (36A, 36B) of the flap.

7. Projection device (10) according to one of claims 1 to 6, wherein said flap (35; 36) is movably mounted on a part of the protective conduit (30) surrounding said opening (33), at a first end of this flap (35; 36).

8. Projection device (10) according to one of claims 1 to 7, wherein guiding means (37, 38) are further provided for a second end of this flap (35; 36), opposite to the first, between said two positions of this flap (35; 36).

9. Projection device (10) according to one of claims 1 to 8, wherein said flap (35; 36) extends from said opening (33), on a side of the protective conduit (30) opposite to said reflection unit (12).

10. Head-up display (1) comprising an image projection device (10) according to one of the preceding claims, and a semi-transparent blade (20) on which the image reflection unit (12) is adapted to reflect the images generated by the image generation unit (11).

11. Head-up display (1) according to claim 10, wherein the semi-transparent blade (20) is a combiner retractable into a protective housing (40) of said image projection device (10).

12. Head-up display (1) according to claim 11, wherein combiner movement means are provided adapted to move the combiner between a deployed position in which it protrudes relative to said protective housing (40) of the image projection device (10), and a retracted position in which it is housed inside said protective housing (40) of the image projection device (10) and wherein the projection device comprises a blocking and release mechanism adapted to move said protective flap between its two blocking and release positions, which is coupled to said combiner movement means such that the movement of the combiner towards its deployed position is coupled to the movement of the flap (35; 36) towards its release position, and that the movement of the combiner towards its retracted position is coupled to the movement of the flap (35; 36) towards its blocking position.

13. Head-up display (1) according to claim 11, wherein said movement means (11) of the combiner (20) are adapted to move the combiner (20) around its deployed position without moving said flap (36).

14. Head-up display according to claim 11, wherein the semi-transparent blade comprises a part of the windshield of a vehicle in which the projection device is installed.
